# NEUE EUROPÄISCHE PATENTSCHRIFT

(11) **EP 1 278 620 B2**
(45) Veröffentlichungstag und Bekanntmachung des Hinweises auf die Entscheidung über den Einspruch: **10.08.2011**
(45) Hinweis auf die Patenterteilung: 18.02.2004
(21) Anmeldenummer: 01940371.6
(22) Anmeldetag: 26.04.2001
(51) Int. Cl.: B29C 41/04

(54) **VERFAHREN ZUR HERSTELLUNG VON GESCHLEUDERTEN GLASFASERVERSTÄRKTEN ROHREN**
METHOD FOR PRODUCING CENTRIFUGALLY CAST, GLASS-FIBRE REINFORCED TUBES
PROCEDE POUR LA PRODUCTION PAR CENTRIFUGATION DE TUYAUX RENFORCES PAR DES FIBRES DE VERRE

(30) Priorität: 27.04.2000 DE 10020642
(43) Veröffentlichungstag der Anmeldung: 29.01.2003
(73) Patentinhaber: C-Tech Ltd., Manama (BH)
(72) Erfinder: CARLSTRÖM, Börge, S-26358 Höganäs (SE); WILLQUIST, Eva, S-22367 Lund (SE)
(74) Vertreter: König, Beate
(86) Internationale Anmeldenummer: PCT/EP2001/004736
(87) Internationale Veröffentlichungsnummer: WO 2001/083185

(56) Entgegenhaltungen:
- EP-A- 0 790 114
- EP-A2- 0 360 758
- WO-A-00/43185
- WO-A-86/05436
- CH-A5- 684 326
- US-A- 5 306 458
- 'DEUTSCHE NORM DIN 19565', 1989

## Beschreibung

Die Erfindung betrifft ein Verfahren zur Herstellung von geschleuderten glasfaserverstärkten Kunststoffrohren, wobei flüssiges aushärtbares Harz, welches einen Füllstoff enthalten kann, zusammen mit Glasfasern und Additiven für die Aushärtung, möglicherweise auch mit Sand, in eine rotierende Matrize eingebracht wird.

In der WO 00/43185 ist ein Verfahren für eine schnelle Herstellung von geschleuderten glasfaserverstärkten Rohren beschrieben, bei dem die Matrizentemperatur mindestens 40°C beträgt.

Wie in der WO 00/43185 offenbart ist, befinden sich die Sandschichten normalerweise in der Mitte der Rohrwand (in der neutralen Zone). Zwar gibt es bei derartigen Glasfaserkunststoffrohren mit Sandschichten im Rohraußenteil einen niedrigen Kunststoffgehalt, beispielsweise von 35% Polyester, aber im Rohrinnenteil kann dieser bis 70% steigen. Bei Rohren mit größerem Durchmesser und Nenndrücken sind die Schichtdicken der Glasfaser-Kunststoff- bzw. Glasfaser-Polyesterschicht so groß, daß die entwickelte Wärme nicht in ausreichendem Maße abgeleitet wird, sondern es kommt zu einem zu starken Temperaturanstieg.

Der Erfindung liegt die Aufgabe zugrunde, ein Verfahren zur Herstellung von geschleuderten glasfaserverstärkten Rohren zu schaffen, bei denen eine schnelle Aushärtung auch mit niedrigerer Matrizentemperatur möglich ist.

Weiter soll es die Erfindung auch ermöglichen, geschleuderte glasfaserverstärkte Rohre mit größeren Durchmessern und für höhere Drücke herzustellen, wobei verhindert wird, daß die von der Reaktion des Kunstharzes herrührende Temperatur zu hoch wird, die Aushärtung zu schnell erfolgt und die Verdichtung deswegen zu schlecht wird.

Diese Aufgabe ist erfindungsgemäß bei einem Verfahren mit den Merkmalen des Anspruchs 1 gelöst. Ein geschleudertes glasfaserverstärktes Kunststoffrohr mit mehreren Schichten aus Glasfasern, Kunstharz, Sand und Additiven gemäß der Erfindung ist im Anspruch 12 angegeben.

Bei dem erfindungsgemäßen Verfahren zur Herstellung von geschleuderten glasfaserverstärkten Kunststoffrohren wird flüssiges aushärtbares Harz, welches einen Füllstoff enthalten kann, zusammen mit Glasfasern und Additiven für die Aushärtung, möglicherweise auch mit Sand, in eine rotierende Matrize eingebracht. Die Additive werden mit Hinsicht auf die Matrizentemperatur während des Einbringens von Rohstoffen in Menge und Art sukzessiv abgestimmt, so daß das Gelieren im Außenteil des Rohres anfängt, wenn der letzte Teil von Rohstoffen eingebracht wird. Die Temperatur ist beim Gelieren im Außenteil niedriger als im Innenteil, und das Gelieren fängt im Innenteil des Rohres erst an, nachdem alle Rohstoffe eingebracht worden sind.

Es hat sich somit erwiesen, daß eine schnelle Aushärtung auch möglich ist, wenn die Matrizentemperatur unter 40°C liegt. Wichtig ist dabei, daß hochreaktive Polyesterharze verwendet werden und daß die Additive von Katalysatoren, Akzeleratoren und Inhibitoren genau mit der Matrizentemperatur und der Wanddicke der Rohre abgestimmt werden.

Um eine schnelle Aushärtung und gleichzeitig eine gute Verdichtung zu erhalten, ist es wichtig, daß die Additivmengen sukzessive während des Einbringens der Rohstoffe geändert werden. Dabei ist darauf zu achten, daß das Gelieren des Harzes genau anfängt, wenn alle Rohstoffe eingebracht worden sind. Wenn das Gelieren im Außenteil anfängt, entsteht Wärme und dadurch steigt die Temperatur auch innen im Rohr. Hier müssen die Additive so abgestimmt werden, daß die Aushärtung nicht so schnell geht, daß die Verdichtung zu schlecht wird oder die Tränkung der Glasfasern nicht genügend wird.

So werden bei einer Verfahrensvariante die Additive so eingestellt, daß das Gelieren erst drei Minuten nach Einbringen sämtlicher Rohstoffe beginnt. Damit ist eine gleichmäßige Verteilung der Rohstoffe im Rohr sichergestellt.

Weiter kann zur Aufwärmung der Matrize nach Beginn des Gelierens in der Außenschicht des Rohrs Warmwasser mit einer Temperatur von mindestens 50°C auf die Matrize gespritzt werden.

Die Temperatur im Innenteil des Rohres kann durch die Wärmeentwicklung im Außenteil auf 50 bis 70°C steigen. Deswegen sollten Inhibitoren verwendet werden, um die Reaktion im Innenteil des Rohres zu steuern. In der Vergangenheit sind bei der Herstellung von Rohren aus glasfaserverstärktem Kunststoff wiederholt Probleme bei der Verwendung von Inhibitoren aufgetreten. Wichtig ist dabei, die notwendige Menge genaus auszuprüfen, da sonst die Rohre nicht genügend ausgehärtet werden. Die Menge und Art der Katalysatoren müssen mit der Inhibitormenge abgestimmt werden.

Die Inhibitormenge kann vorteilhaft zwischen 38 und 61% von der Menge liegen, die eine Wärmeentwicklung verhindert.

Vorzugsweise wird eine mehr reaktive Katalysatormischung im Außenteil des Rohres als im Innenteil verwendet.

Bei einer vorteilhaften Verfahrensvariante werden Katalysatorpumpen verwendet derart, daß ein Katalysator oder eine Katalysatormischung mit niedriger Anspringtemperatur im Außenteil des Rohres verwendet wird, wobei der andere Katalysator bzw. die andere Katalysatormischung im Innenteil des Rohres verwendet wird.

Bei einer Verfahrensvariante, bei der stets Sand und als Kunststoff vorzugsweise Polyesterharz verwendet wird, werden mehrere. Sandschichten verwendet, die unter Einsatz thermischer Berechnungen in eine Anzahl von Sandschichten aufgeteilt werden. Die thermischen Berechnungen dienen dem Zweck, die in den Glasfaser-Polyesterschichten entwickelte Wärme in die Sandschichten zu übertragen und zu verhindern, daß die Temperatur zu hoch wird. Die Sandschichten führen vorteilhaft dazu, daß die Verdichtung in den darunter liegenden Glasfaser-Polyesterschichten besser wird und der Gehalt an Polyesterharz reduziert wird. Die Reduzierung des Polyestergehalts bewirkt eine Verringerung des Temperaturanstiegs in den Glasfaserschichten.

Die Enthalpie des Polyesterharzes spielt bei den Berechnungen eine große Rolle. Sie liegt für nicht flexible Polyesterharze in der Größenordnung von 250 bis 370 Joule/g. Bei sehr flexiblen Harzen liegt sie bei 150 bis 200 Joule/g. Unten werden einige Beispiele gegeben für Polyester-Mischungen mit einer Enthalpie des Harzes von 290 Joule/g gegeben, wenn die Temperatur der Rohstoffe 20°C ist:

| Glasfasergehalt (%) | exotherme Temperatur (°C) |
|---|---|
| 0 | 181 |
| 30 | 155 |
| 40 | 144 |
| 50 | 121 |
| 60 | 116 |
| 60 | 116 |
| 70 | 99 |
| 80 | 78 |

Wenn Polyesterharze mit Füllstoffen verwendet werden, wird zweckmäßigerweise ein Polyesterharz mit einer Enthalpie von etwa 350 Joule verwendet. Es ist auch zweckmäßig, Füllstoff in der inneren Rohrwand zu verwenden.

Um eine gute Verdichtung zu erhalten, soll eine Faserlänge von 75 bis 100 mm verwendet werden. Dadurch kann der Rovinggehalt auf 70% erhöht werden.

Die Aufteilung des Sandes in unterschiedlichen Schichten soll so gemacht werden, daß keine Schicht, ausgenommen die Sandschicht der neutralen Zone der Rohrwand, eine Dicke hat, die größer als 0,0025 des Außendurchmessers und nicht mehr als 20% der Wanddicke hat. Die Sandschichten sollen kein Roving (Glasspinnfäden) enthalten. Wenn Sand zugesetzt wird, soll ein Überschuß an Harz vorhanden sein. Dadurch fließt der Sand sehr gleichmäßig aus und deckt Ungleichmäßigkeiten in den Rovingschichten ab. Dadurch wird der Bedarf an Deckschichtharz reduziert.

Nach der letzten Sandschicht muß eine mindestens zwei mm dicke Rovingschicht als Sperrschicht vorhanden sein. Der Glasfasergehalt muß hier unter 40% liegen.

Vorzugsweise sind die einzelnen Schichten mit Glasfaserarmierung größer als 0,005 mal der Außendurchmesser. In Umfangsrichtung sind die Schichten mit Glasfaserarmierung, ausgenommen die Sperrschicht, zwischen 1,5 und 3,5 mm dick.

Um eine gute Verdichtung zu erhalten, muß die Gelzeit in den einzelnen Schichten abhängig von der Einspritzzeit genau eingestellt werden.

Die Erfindung wird untenstehend mittels Beispielen und anhand der Zeichnungen beschrieben, wobei diese Darstellung zur Erläuterung der Erfindung dient, diese jedoch mit den Konkretisierungen nicht einschränken soll. Es zeigen
- Fig. 1: bis 7 Diagramme, die den Temperaturverlauf mit der Zeit für die Form und Rohre mit unterschiedlichen Wanddicken für unterschiedliche Schichten und unterschiedliche Inhibitormengenanteile zeigt,
- Fig. 8: ein Beispiel für die Anordnung von Mischern auf einer nach dem erfindungsgemäßen Verfahren arbeitenden Einspritzmaschine zur Herstellung geschleuderter glasfaserverstärkter Kunststoffrohre,
- Fig. 9: eine schematische Ansicht des Aufbaus einer Anlage mit Verarbeitungsstationen A bis H für die Herstellung geschleuderter glasfaserverstärkter Kunststoffrohre,

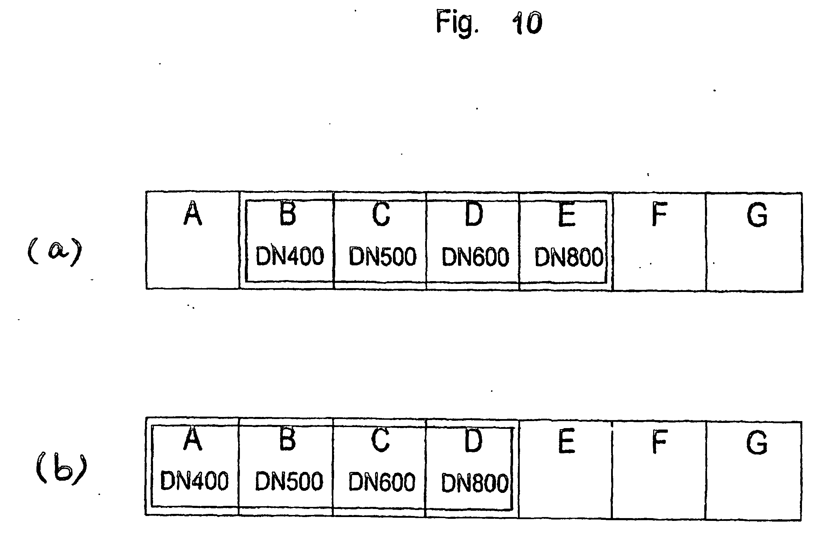

- Fig 10: eine schematische Ansicht des Aufbaus einer Anlage mit Verarbeitungsstationen A bis G für die Herstellung geschleuderter glasfaserverstärkter Kunststoffrohre,
- Fig. 11: bis 13 den Aufbau von Rohren für verschiedene Nennweiten und Nenndrücke und
- Fig. 14: ein Diagramm, das den Temperaturverlauf mit der Zeit innen im Rohr und außen auf der Matrize zeigt.

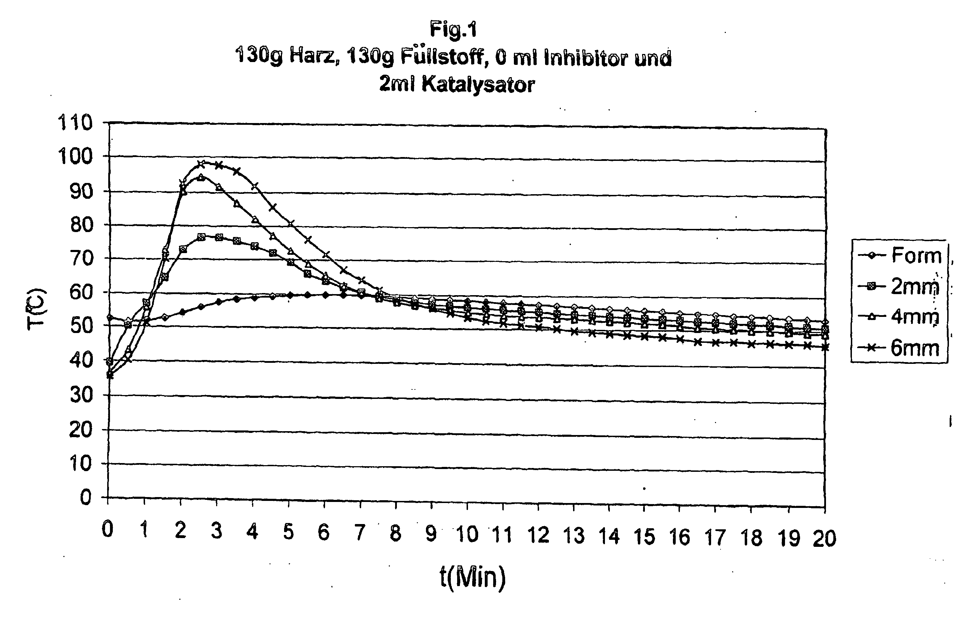

Fig. 1 bis 7 zeigen die Temperaturentwicklung in unterschiedlichen Schichten, berechnet vom Unterteil einer erwärmten Form aus.

Fig. 1 zeigt den Verlauf der Temperaturentwicklung ohne Inhibitor. Die Formtemperatur ist 52°C und das Gelieren tritt bei 50°C nach etwa einer Minute auf.

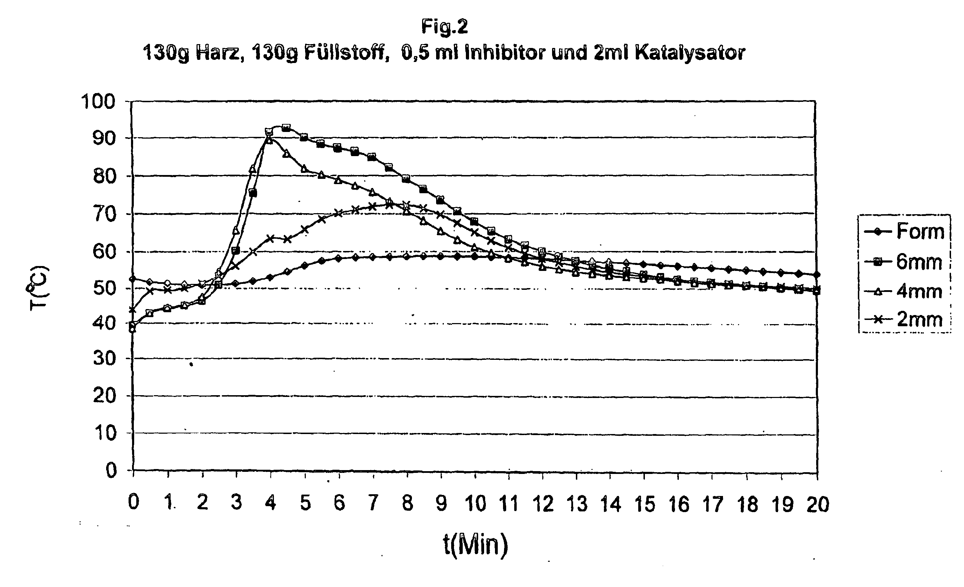

Fig. 2 zeigt, daß mit der Verwendung von 0,38% Inhibitor, berechnet in bezug auf die Menge Bodyharz (Reinharz), eine längere Gelzeit erhalten worden ist.

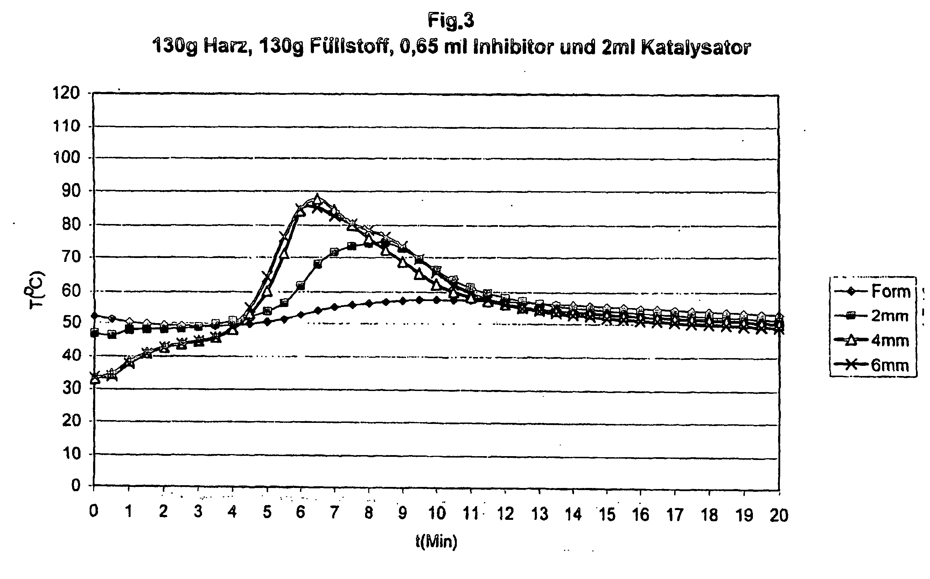

Fig. 3 zeigt, daß durch die Verwendung von Inhibitor Gelieren im Oberteil erst nach etwa vier Minuten eintrifft.

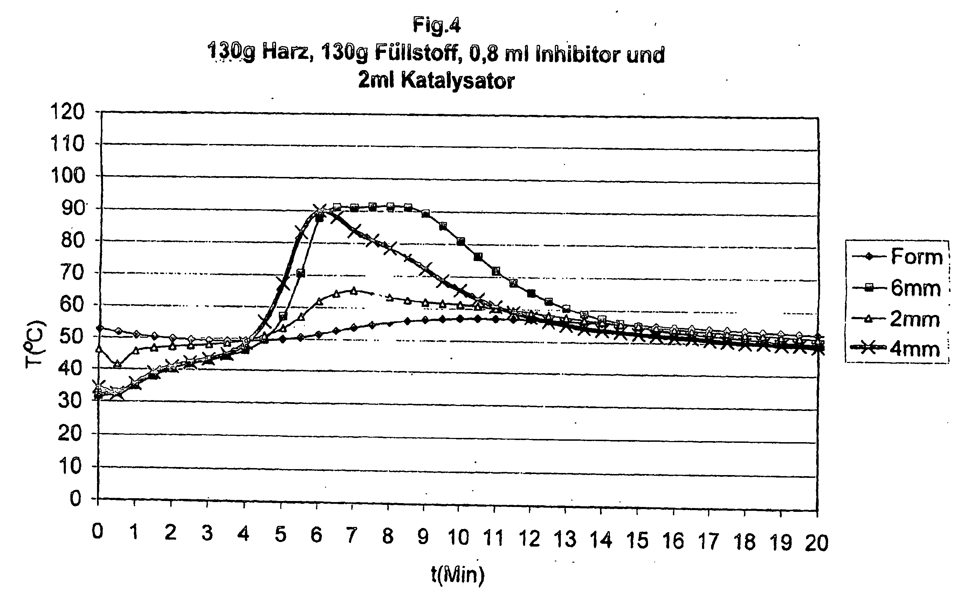

Fig. 4 zeigt, daß mit der Verwendung von 0,61% Inhibitor, berechnet in bezug auf die Menge Bodyharz keine längere Gelzeit erhalten wird als im Fall von Fig. 3.

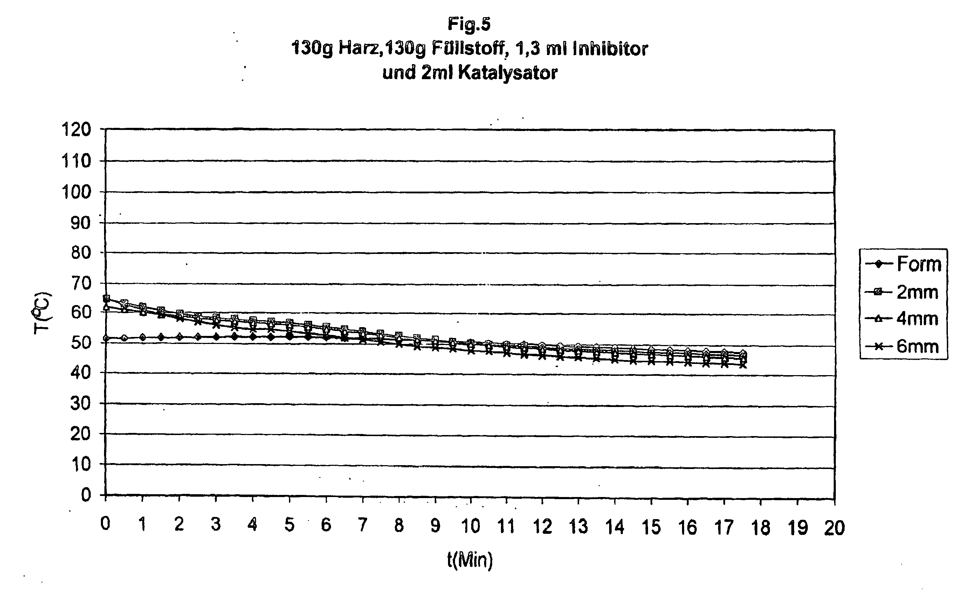

Fig. 5 zeigt, daß keine Wärmeentwicklung entsteht, wenn zuviel Inhibitor verwendet wird.

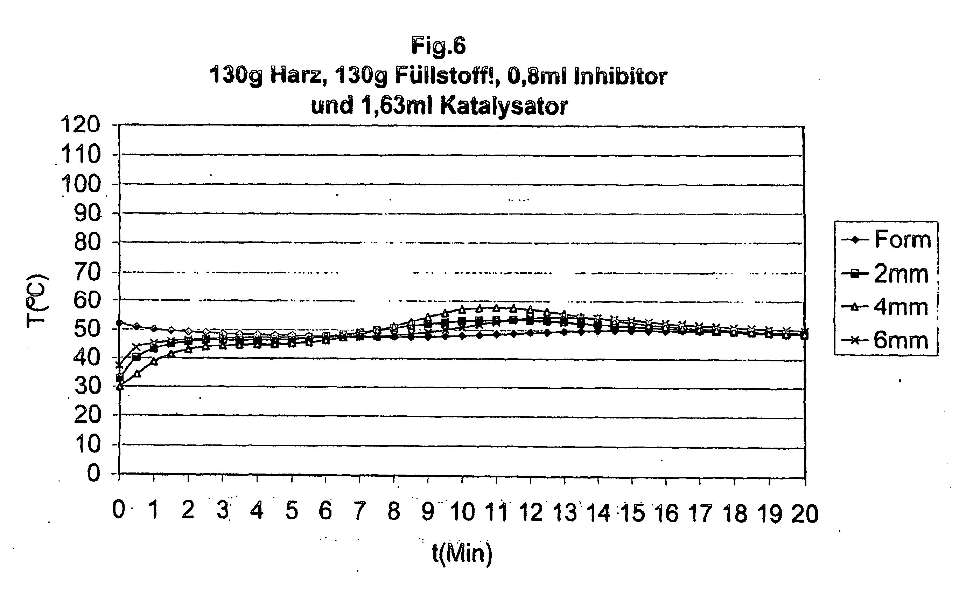

Fig. 6 zeigt eine ähnliche Reaktion, wenn die Menge von Katalysator reduziert wird.

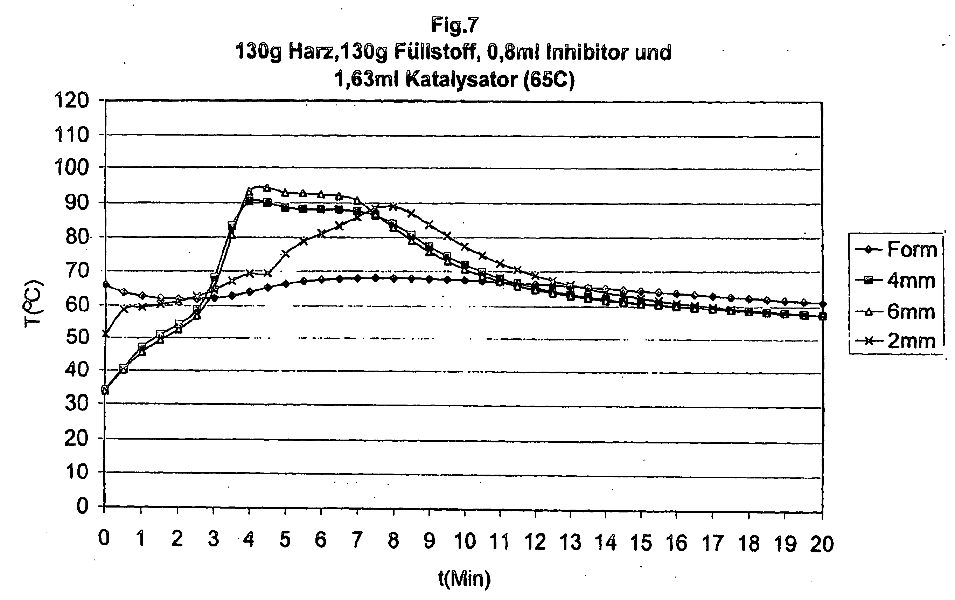

Fig. 7 zeigt, daß eine Wärmeentwicklung entsteht, wenn die Formtemperatur erhöht wird. In der Praxis entspricht dies Sprühen mit Warmwasser auf der Matrize.

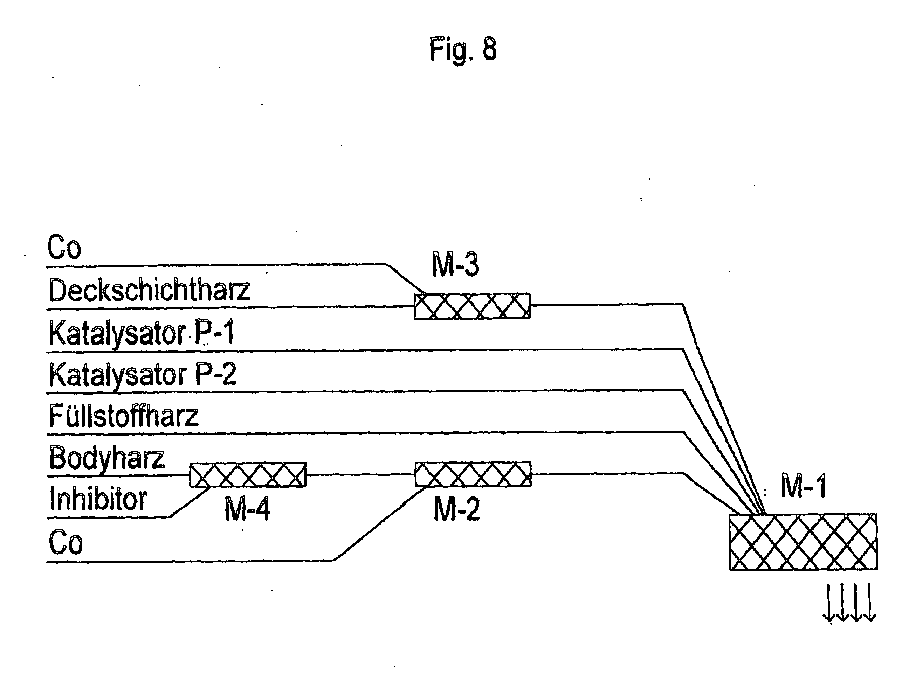

Fig. 8 zeigt die Anordnung von den notwendigen Mischern auf einer Einspritzmaschine. M-1 ist der Mischer ganz vorne, wo mit der Hilfe von zwei Katalysatorpumpen P-1 und P-2 Katalysatoren in die Harze eingemischt werden. M-2 ist der Mischer, wo Beschleuniger, z.B. Co-Akzelerator, in das Bodyharz eingemischt wird. M-3 ist der Mischer, wo Beschleuniger in das Linerharz (Reinharz als Hauptbestandteil in der Deckschicht innen im Rohr) eingemischt wird. M-4 ist der Mischer hinten in der Einspritzmaschine, wo Inhibitor in das Bodyharz eingemischt wird.

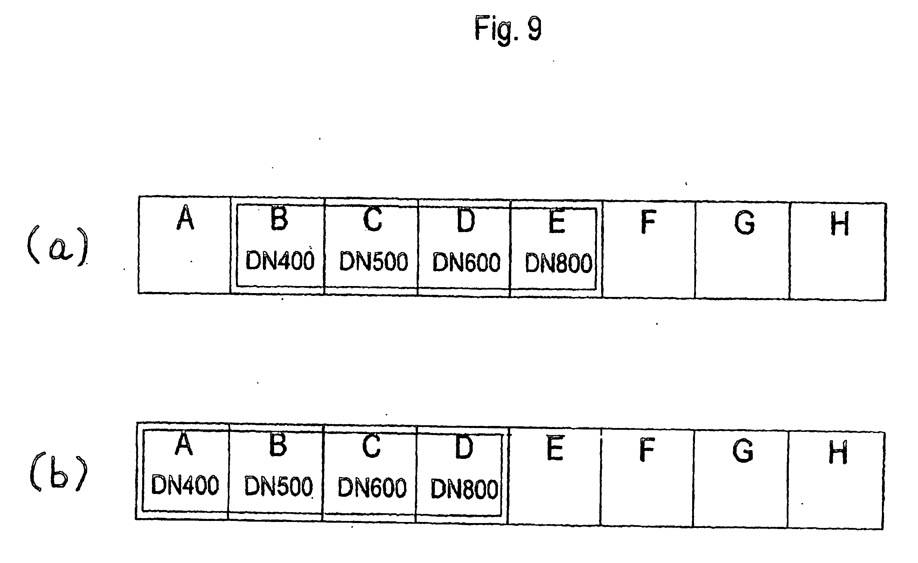

Fig. 9 zeigt den Aufbau einer Anlage mit 8 Verarbeitungsstationen. Fig. 9 (a) veranschaulicht das Einspritzen und Fig. 9 (b) das Ausziehen.

Das nachfolgende Beispiel veranschaulicht die Arbeitsweise der Anlage.

### Beispiel

In einem Füllstoffmischer werden folgende Komponenten gemischt:
100 Teile Bodyharz
0,5 Teile Inhibitor von 10% Butylcatechol in Styrol
0,2 Teile Promotor D (N,N-Dietylacetoacetamid)
150 Teile CaCO₃-Pulver.

In Mischer M-2 wird zum Bodyharz Co-Beschleuniger mit 1% Co zugesetzt.

In Mischer M-3 wird 0,5% Co-Beschleuniger zugesetzt.

In Mischer M-4 wird 0,5% Inhibitor, bestehend aus 10% Butylcatechol, zugesetzt.

Ein Rohr mit DN 800 PN 10 [Nenndurchmesser von 800 mm, Nenndruck von 9,8 bar] wird wie folgt hergestellt:

Das Rohr hat 7 Schichten mit folgendem Aufbau, von außen gerechnet:
1. Sandschicht
2. Langfaserarmierung
3. Kurzfaserarmierung
4. Sandschicht
5. Langfaserarmierung
6. Sperrschicht mit Kurzfaserarmierung
7. Deckschicht.

In allen Schichten wird 1,5% Katalysator verwendet, wobei unterschiedliche Verhältnisse von Aceton-Acetyl-Peroxid (AAP) und tertiärem Butyl-Perbenzoat (TBPB) wie folgt verwendet werden:

| Schicht | AAP | TBPB | Co in M-2 |
|---|---|---|---|
| 1 | 50% | 50% | 0,5% |
| 2 | 40% | 60% | 0,7% |
| 3 | 30% | 70% | 0,7% |
| 4 | 50% | 50% | 0,8% |
| 5 | 30% | 70% | 0,6% |
| 6 | 25% | 75% | 0,5% |
| 7 | 20% | 80% | - |
| AAP ist mehr reaktiv als TBPB. Es hat eine niedrigere Anspringtemperatur. | | | |

Die Einspritzzeit ist 6 Minuten und die Matrizentemperatur 35°C. Nach dem Einbringen der Rohstoffe bringt der wagen die Matrize auf die Station F in Fig. 9, wo nach 4 Minuten alle Schichten gelatiniert haben und mit Warmwasser von 70°C während 30 Sekunden gespritzt wird.

Nach 5 Minuten in Station F wird die Matrize auf Station G gebracht und nach **4** Minuten auf Station H, wo sofort mit Warmwasser von 70°C während 20 Sekunden gespritzt wird. In Station H wird das Ausziehen vorbereitet. Nach 4 Minuten wird die Matrize zu Station D gebracht, wo das Rohr warm ausgezogen wird.

Zurück in Position E wird die Matrize auf 35°C gebracht und ein neues Rohr mit DN 800 hergestellt.

Unter jeder Matrize gibt es einen Auffangbehälter für Warmoder Kaltwasser. In jeder Station gibt es in festen Positionen die Möglichkeit, mit Warm- oder Kaltwasser zu spritzen.

Das Wasser von den Auffangbehältern wird ohne Separation von Kalt- und Warmwasser in einer festen Rinne aufgesammelt und zu der Wasseraufbereitungsanlage in einer Rohrleitung zurückgeführt.

Das Einstellen der Harzreaktion ist so schnell, daß in dem Rohr die Reaktion im Außenteil auf etwa 70°C steigt und im Innenteil auf 90 bis 110°C. Das Spritzen mit Warmwasser soll verhindern, daß die niedrigere Matrizentemperatur die Reaktion im Außenteil verhindert.

Bei Einsatz mehrerer Matrizen ergibt sich gemäß Darstellung von Fig. 9 folgende Arbeitsweise. Kommt die Matrize DN 600 in die Einspritzstation E, muß die Matrize DN 800 in der Station G sein, und wenn die Matrize DN 500 in der Station E ist, muß die Matrize DN 800 in der Station G sein. Die Matrize DN 800 ist in der Station H, wenn die Matrize DN 400 in der Station E ist. Abhängig von der Ausgangstemperatur der Matrize, der Wärmekapazität der Matrize und der Matrizenmasse auf dem Wagen kann bei Bedarf Warmwasser oder Kaltwasser in den Stationen F bis H verwendet werden.

Die acht Stationen der Anlage gemäß Fig. 9 ermöglichen es, daß die Rohre immer bei Station D ausgezogen werden. Sind jedoch nur sieben Stationen vorhanden, so muß das Rohr DN 800 in Station G und die anderen Rohre müssen in Station C ausgezogen werden. Station D wird dann für das Einspritzen verwendet.

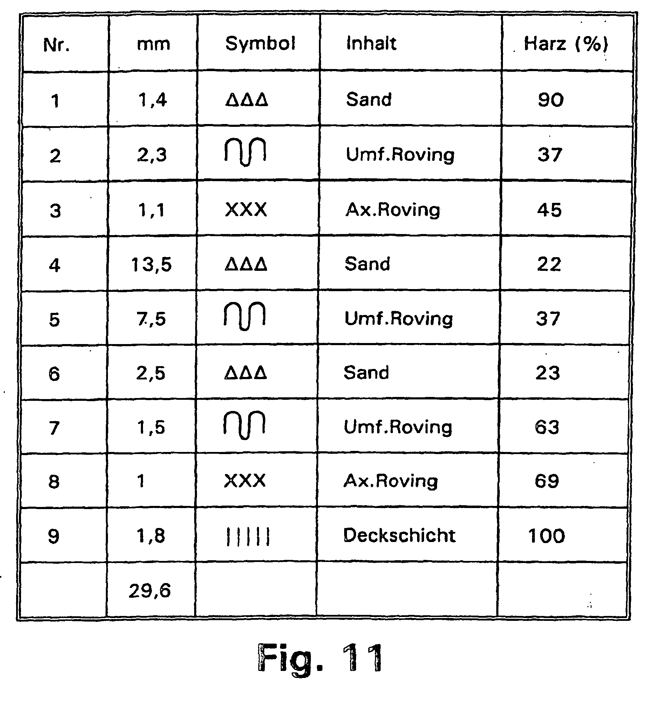

Es wird im folgenden der Aufbau eines Rohres gemäß der Erfindung beschrieben, wie er in Fig. 11 veranschaulicht ist. Für die Berechnungen wurde angenommen, daß die Wärmeentwicklung den Schichten Nr. 1 bis 3 von der Stahlmatrize aufgenommen wird. Für die Schichten 4 bis 8 ist die Wärmeentwicklung 5.800 Joule/m Rohr. Die Wärmekapazität ist 70,6 Joule/°C und Meter Rohr, was eine Temperatursteigerung von 82°C geben würde. Das Deckschichtharz hat eine Enthalpie von 170 Joule/g. Mit einer spezifischen wärme von 1,8 Joule/g,°C ergäbe sich eine Temperatursteigerung von 94°C, wenn keine Wärme verlorenginge. Die maximale Temperatur wäre etwa 102°C mit gegen 110°C zulässigen Temperaturwerten. Die Angabe "Umf.Roving" bezieht sich auf die Rovingorientierung hauptsächlich in Umfangsrichtung. Die Rovinglänge ist 60 mm.

Wenn Polyesterharze mit Füllstoff verwendet werden, sollten diese eine Enthalpie von 350 Joule haben. Es ist auch zweckmäßig, in der inneren Rohrwand Füllstoff zu verwenden, siehe Schichten Nr. 4 bis 6 in Fig. 11.

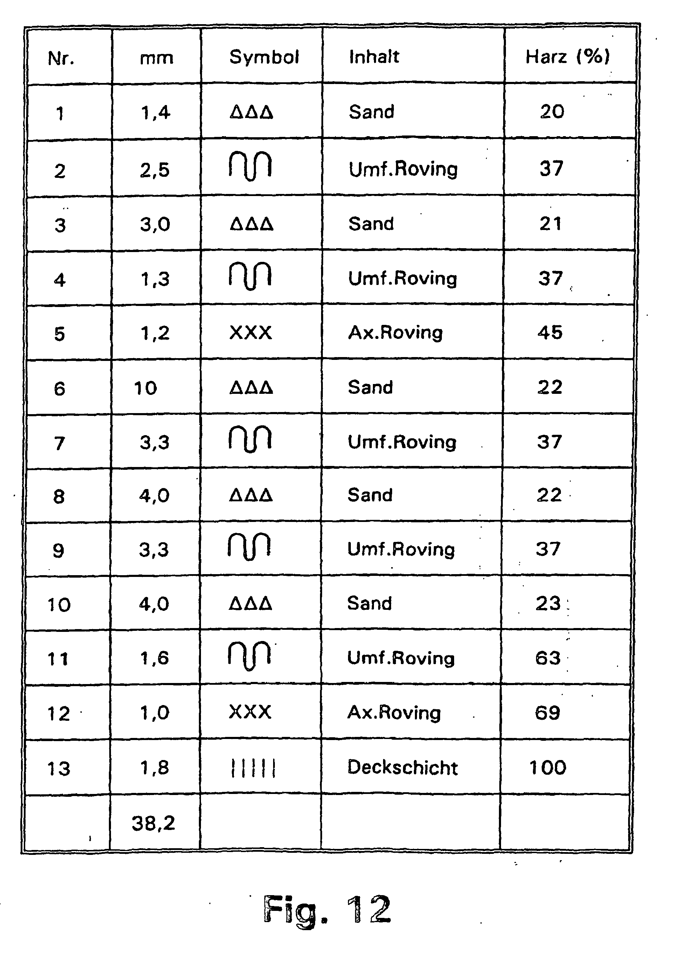

In Fig. 12 ist der Aufbau eines zweiten Beispiels eines Rohres gemäß der Erfindung veranschaulicht. Das Rohr hat ist ein Mehrschichtrohr DN 2000 (Nennweite 2.000 mm), PN 16 (Nenndruck 15,7 bar), SN 10.000 (Nennsteifigkeit 10.000 N/m²). Die Rovinglänge ist 60 mm.

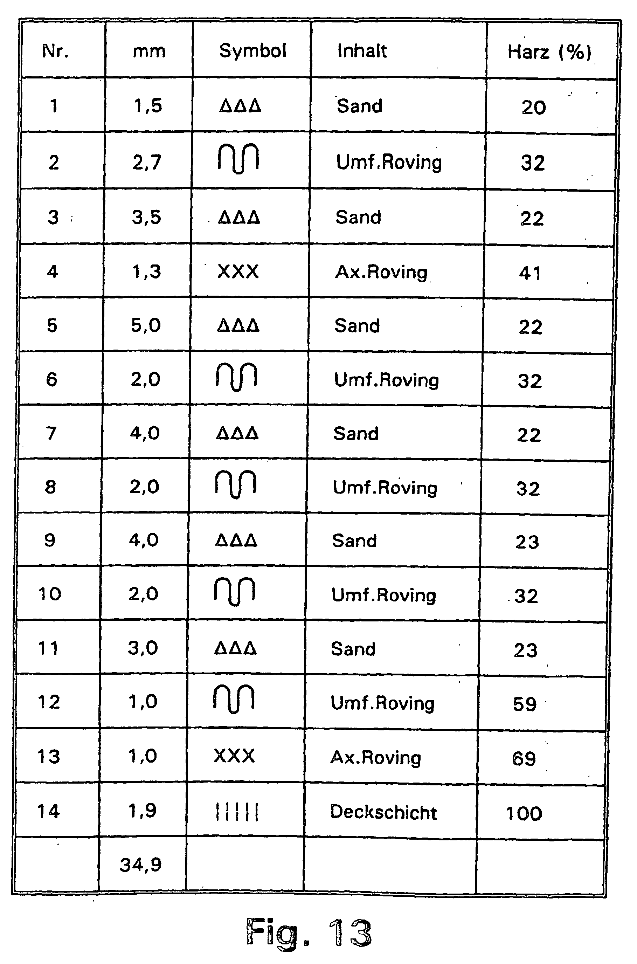

Der Aufbau eines dritten Beispiels eines Rohres gemäß der Erfindung in Fig. 13 veranschaulicht. Das Rohr hat ist ein Mehrschichtrohr DN 2.400 (Nennweite 2.400 mm), PN 10 (Nenndruck 9,8 bar), SN 5.000 (Nennsteifigkeit 5.000 N/m²). Die Rovinglänge ist 100 mm.

Wie erwähnt muß die Gelzeit in den einzelnen Schichten abhängig von der Einspritzzeit genau einstellt werden. Das in Fig. 13 veranschaulichte Rohr braucht eine Einspritzzeit von 23 Minuten. Das bedeutet, daß die Gelzeit für Schicht Nr. 1 mindestens 23 Minuten bei Raumtemperatur sein muß, ob die Matrize und Rohstoffe bei Raumtemperatur sind. Die Einspritzzeit für Schicht Nr. 2 beträgt 2,5 Minuten. Dies bedeutet, daß die Gelzeit für diese Schichten mindestens 20,5 Minuten beträgt. Ähnlich muß die Berechnung für jede Schicht durchgeführt werden. Basierend auf Laborprüfungen müssen für jede Schicht die Mengen der Additive neu berechnet werden.

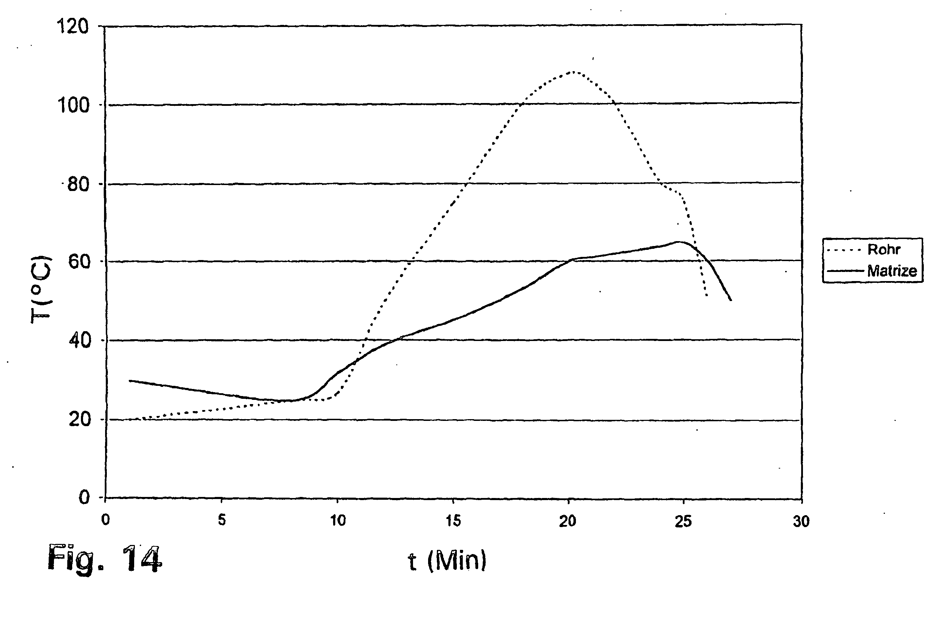

Fig. 14 veranschaulicht das Ergebnis der Temperaturmessungen innen im Rohr und außen auf der Matrize. Die Meßergebnisse stimmen gut mit den Berechnungen überein.

## Patentansprüche

1. Verfahren zur Herstellung von geschleuderten glasfaserverstärkten Kunststoffrohren, wobei flüssiges aushärtbares Harz, welches einen Füllstoff enthalten kann, zusammen mit Glasfasern und Additiven für die Aushärtung, möglicherweise auch mit Sand, in eine rotierende Matrize eingebracht wird,
**dadurch gekennzeichnet, daß**
die Additive mit Hinsicht auf die Matrizentemperatur während des Einbringens von Rohstoffen in Menge und Art sukzessiv abgestimmt werden, so daß das Gelieren im Außenteil des Rohres anfängt, wenn der letzte Teil von Rohstoffen eingebracht wird,
die Temperatur beim Gelieren niedriger im Außenteil ist als im Innenteil, und
das Gelieren im Innenteil des Rohres erst anfängt, nachdem alle Rohstoffe eingebracht worden sind.

2. Verfahren nach Anspruch 1, **dadurch gekennzeichnet, daß** das Gelieren im Außenteil erst mindestens drei Minuten anfängt, nachdem alle Rohstoffe eingebracht worden sind.

3. Verfahren nach Anspruch 1 oder 2, **dadurch gekennzeichnet, daß** Warmwasser mit einer Temperatur von mindestens 50°C auf die Matrize gespritzt wird, nachdem das Gelieren in der Außenschicht des Rohres angefangen hat.

4. Verfahren nach einem der Ansprüche 1 bis 3, **dadurch gekennzeichnet, daß** Inhibitor verwendet wird in einer Menge, welche zwischen 38% und 61% von der Menge liegt, welche eine Wärmeentwicklung verhindert.

5. Verfahren nach einem der Ansprüche 1 bis 4, **dadurch gekennzeichnet, daß** eine mehr reaktive Katalysatormischung im Außenteil des Rohres verwendet wird als im Innenteil des Rohres.

6. Verfahren nach einem der Ansprüche 1 bis 5, wobei zwei Katalysatorpumpen verwendet werden, **dadurch gekennzeichnet, daß** in der einen Pumpe ein Katalysator oder eine Katalysatormischung mit niedriger Anspringtemperatur im Außenteil des Rohres verwendet wird und der andere im Innenteil des Rohres.

7. Verfahren nach einem der Ansprüche 1 bis 6, **dadurch gekennzeichnet, daß** die Sandmenge, welche für das Erreichen der Steifigkeit notwendig ist, auf mehrere Schichten aufgeteilt wird, so daß alle Glasfaserschichten, ausgenommen die Sperrschicht, zwischen den Sandschichten positioniert sind, in welchen der Gehalt an Roving durch die Pressung der Sandschichten unter der Einwirkung Zentrifugalkraft erhöht wird.

8. Verfahren nach Anspruch 7, **dadurch gekennzeichnet, daß** die einzelnen Sandschichten, ausgenommen die Sandschicht in der Mitte der Rohrwand (neutrale Zone), nicht größer als 15% der Wanddicke des Rohres sind.

9. Verfahren nach Anspruch 7 oder 8, **dadurch gekennzeichnet, daß** die einzelnen Sandschichten, ausgenommen die Sandschicht in der neutralen Zone, nicht größer als 0,0025 mal der Außendurchmesser sind.

10. Verfahren nach einem der Ansprüche 7 bis 9, **dadurch gekennzeichnet, daß** die einzelnen Schichten mit Glasfaserarmierung nicht größer als 0,005 mal der Außendurchmesser sind.

11. Verfahren nach einem der Ansprüche 7 bis 10, **dadurch gekennzeichnet, daß** die Schichten mit Glasfaserarmierung in Umfangsrichtung, ausgenommen die Sperrschicht, nicht kleiner als 1,5 mm und nicht größer als 3,5 mm sind.

12. Geschleudertes glasfaserverstärktes Kunststoffrohr mit mehreren Schichten aus Glasfasern, Kunstharz, welches einen Füllstoff enthalten kann, Glasfasern, Sand und Additiven, **dadurch gekennzeichnet, daß** die Sandmenge, welche für das Erreichen der Steifigkeit notwendig ist, auf mehrere Schichten aufgeteilt ist, so daß alle Glasfaserschichten, ausgenommen die Sperrschicht, zwischen den Sandschichten positioniert sind, in welchen der Gehalt an Roving durch die Pressung der Sandschichten unter der Einwirkung Zentrifugalkraft erhöht worden ist, und die Sperrschicht eine mindestens zwei mm dicke Rovingschicht mit einem Glasfasergehalt unter 40% ist.

13. Kunststoffrohr nach Anspruch 12, **dadurch gekennzeichnet, daß** die einzelnen Sandschichten, ausgenommen die Sandschicht in der Mitte der Rohrwand (neutrale Zone), nicht größer als 15 % der Wanddicke des Rohres sind.

14. Kunststoffrohr nach Anspruch 12 oder 13, **dadurch gekennzeichnet, daß** die einzelnen Sandschichten, ausgenommen die Sandschicht in der neutralen Zone, nicht größer als 0,0025 mal der Außendurchmesser sind.

15. Kunststoffrohr nach einem der Ansprüche 12 bis 14, **dadurch gekennzeichnet, daß** die einzelnen Schichten mit Glasfaserarmierung nicht größer als 0,005 mal der Außendurchmesser sind.

16. Kunststoffrohr nach einem der Ansprüche 12 bis 15, **dadurch gekennzeichnet, daß** die Schichten mit Glasfaserarmierung in Umfangsrichtung, ausgenommen die Sperrschicht, nicht kleiner als 1,5 mm und nicht größer als 3,5 mm sind.

## Claims

1. Method of manufacturing centrifuged glass fibre-reinforced synthetic material pipes, wherein liquid curable resin, which can contain a filler, together with glass fibres and additives for the curing process, possibly also with sand, is introduced into a rotating mould, **characterised in that**
with respect to the mould temperature as the raw materials are introduced, the quantity and type of additives are adapted in a successive manner, so that gelling commences in the outer part of the pipe when the last part of the raw materials is introduced,
upon gelling the temperature is lower in the outer part than in the inner part, and
the gelling only commences in the inner part of the pipe after all of the raw materials have been introduced.

2. Method according to claim 1, **characterised in that** gelling only commences in the outer part at least three minutes after all of the raw materials have been introduced.

3. Method according to claim 1 or 2, **characterised in that** warm water at a temperature of at least 50°C is sprayed on to the mould after gelling has commenced in the outer layer of the pipe.

4. Method according to any one of the claims 1 to 3, **characterised in that** an inhibitor is used in a quantity which is between 38% and 61% of the quantity which prevents heat development.

5. Method according to any one of the claims 1 to 4, **characterised in that** a more reactive catalyst mixture is used in the outer part of the pipe than in the inner part of the pipe.

6. Method according to any one of the claims 1 to 5, **characterised in that** the individual layers comprising the glass fibre-reinforcement are not greater than 0.005 times the outer diameters.

7. Method according to any one of the claims 1 to 6, **characterised in that** the quantity of sand which is required to achieve the rigidity is divided up into several layers, so that all of the glass fibre layers, with the exception of the barrier layer, are positioned between the sand layers, in which the content of roving is increased by pressing the sand layers under the effect of centrifugal force.

8. Method according to claim 7, **characterised in that**, with the exception of the sand layer in the middle of the pipe wall (neutral zone), the individual sand layers are not greater than 15% of the wall thickness of the pipe.

9. Method according to claim 7 or 8, **characterised in that**, with the exception of the sand layer in the neutral zone, the individual sand layers are not greater than 0.0025 times the outer diameters.

10. Method according to any one of the claims 7 to 9, **characterised in that** the individual layers comprising the glass fibre-reinforcement are not greater than 0.005 times the outer diameters.

11. Method according to any one of the claims 7 to 10, **characterised in that**, with the exception of the barrier layer, the layers comprising the glass fibre-reinforcement in the circumferential direction are not smaller than 1.5 mm and not greater than 3.5 mm.

12. Centrifuged, glass fibre-reinforced synthetic material pipe comprising a plurality of layers consisting of glass fibres, synthetic resin, which can contain a filler, of glass fibres, sand and additives, **characterised in that** the quantity of sand which is required to achieve the rigidity is divided up into several layers, so that all of the glass fibre layers, with the exception of the barrier layer, are positioned between the sand layers, in which the content of roving has been increased by pressing the sand layers under the effect of centrifugal force, and the barrier layer is a layer of roving at least 2 mm in thickness which comprises a glass

13. Synthetic material pipe according to claim 12, **characterised in that**, with the exception of the sand layer in the middle of the pipe wall (neutral zone), the individual sand layers are not greater than 15% of the wall thickness of the pipe.

14. Synthetic material pipe according to claim 12 or 13, **characterised in that**, with the exception of the sand layer in the neutral zone, the individual sand layers are not greater than 0.0025 times the outer diameters.

15. Synthetic material pipe according to any one of the claims 12 to 14, **characterised in that** the individual layers comprising the glass fibre-reinforcement are not greater than 0.005 times the outer diameters.

16. Synthetic material pipe according to any one of the claims 12 to 15, **characterised in that**, with the exception of the barrier layer, the layers with the glass fibre-reinforcement in the circumferential direction are not smaller than 1.5 mm and not greater than 3.5 mm.

## Revendications

1. Procédé de fabrication par centrifugation de tuyaux en matière plastique renforcée par fibres de verre, selon lequel on introduit dans une matrice animée d'un mouvement de rotation de la résine liquide durcissable, qui peut contenir une charge, en même temps que des fibres de verre et des additifs pour le durcissage, éventuellement avec du sable, **caractérisé en ce**
**qu'**on règle par actions successives les quantités et types d'additifs, pendant l'introduction de matières premières en tenant compte de la température de la matrice, de telle sorte que la gélification dans la zone extérieure du tuyau commence lorsque la dernière fraction de matières premières est introduite,
**que** la température lors de la gélification est plus basse dans la zone extérieure que dans la zone intérieure,
la gélification dans la zone intérieure du tuyau ne commence que lorsque toutes les matières premières ont été introduites.

2. Procédé selon la revendication 1, **caractérisé en ce que** la gélification dans la zone extérieure commence au moins trois minutes après que toutes les matières premières ont été introduites.

3. Procédé selon la revendication 1 ou 2, **caractérisé en ce qu'**on arrose la matrice avec de l'eau chaude à une température d'au moins 50°C après que la gélification a commencé dans la couche extérieure du tube.

4. Procédé selon une des revendications 1 à 3, **caractérisé en ce qu'**on utilise un inhibiteur en une quantité qui est comprise entre 38% et 61% de la quantité empêchant un dégagement de chaleur.

5. Procédé selon une des revendications 1 à 4, **caractérisé en ce qu'**on utilise un mélange catalytique plus réactif dans la zone extérieure du tuyau que dans la zone intérieure du tuyau.

6. Procédé selon une des revendications 1 à 5, dans lequel on utilise deux pompes à catalyseur, **caractérisé en ce que** dans l'une des pompes on utilise un catalyseur ou un mélange catalytique à faible température réactionnelle dans la zone extérieure du tuyau et l'autre dans la zone intérieure du tuyau.

7. Procédé selon une des revendications 1 à 6, **caractérisé en ce qu'**on répartit sur plusieurs couches la quantité de sable nécessaire pour l'obtention de la rigidité, de telle sorte que toutes les couches de fibres de verre, à l'exception de la couche d'arrêt, soient situées entre les couches de sable, couches dans lesquelles la proportion de roving est augmentée par la pression des couches de sable sous l'action de la force centrifuge.

8. Procédé selon la revendication 7, **caractérisé en ce que** les différentes couches de sable, à l'exception de la couche de sable au milieu de la paroi du tuyau (zone neutre), ne sont pas supérieures à 15% de l'épaisseur de la paroi du tuyau.

9. Procédé selon la revendication 7 ou 8, **caractérisé en ce que** les différentes couches de sable, à l'exception de la couche de sable dans la zone neutre ne sont pas supérieures à 0,0025 fois le diamètre extérieur.

10. Procédé selon une des revendications 7 à 9, **caractérisé en ce que** les différentes couches avec armure de fibres de verre ne sont pas supérieures à 0,005 fois le diamètre extérieur.

11. Procédé selon une des revendications 7 à 10, **caractérisé en ce que** les couches avec armure de fibres de verre dans la direction périphérique, à l'exception de la couche d'arrêt, ne sont pas inférieures à 1,5 mm et pas supérieures à 3,5 mm.

12. Tuyau en matière plastique renforcée par fibres de verres produit par centrifugation, comportant plusieurs couches de fibres de verre, résine, qui peut contenir une charge, sable et additifs, **caractérisé en ce que** la quantité de sable nécessaire pour l'obtention de la rigidité, de telle sorte que toutes les couches de fibres de verre, à l'exception de la couche d'arrêt, soient disposées entre les couches de sable, dans lesquelles la proportion de roving a été augmentée par la pression des couches de sable sous l'action de la force centrifuge et **en ce que** la couche d'arrêt est une couche de roving d'au moins 2 mm d'épaisseur avec une teneur en fibres de verre inférieure à 40%.

13. Tuyau en matière plastique selon la revendication 12, **caractérisé en ce que** les différentes couches de sable, à l'exception de la couche de sable au milieu de la paroi du tuyau (zone neutre) ne sont pas supérieures à 15% de l'épaisseur de la paroi du tuyau.

14. Tuyau en matière plastique selon la revendication 12 ou 13, **caractérisé en ce que** les différentes couches de sable, à l'exception de la couche de sable dans la zone neutre ne sont pas supérieures à 0,0025 fois le diamètre extérieur.

15. Tuyau en matière plastique selon une des revendications 12 à 14, **caractérisé en ce que** les différentes couches avec armure de fibres de verre ne sont pas supérieures à 0,005 fois le diamètre extérieur.

16. Tuyau en matière plastique selon une des revendications 12 à 15, **caractérisé en ce que** les couches avec armure de fibres de verre, à l'exception de la couche d'arrêt, ne sont pas inférieures à 1,5 mm supérieures et pas supérieures à 3,5 mm.
